# EUROPEAN PATENT APPLICATION

(11) **EP 4 349 580 A1**
(43) Date of publication of application: **10.04.2024**
(21) Application number: 22306487.4
(22) Date of filing: 05.10.2022
(51) Int. Cl.: B29D 11/00, B29C 35/02, B29C 35/08, B29L 11/00

(54) **APPARATUS AND METHOD FOR HEAT TREATMENT OF AT LEAST ONE LENS BODY**

(71) Applicant: Essilor International, 94220 Charenton-Le-Pont (FR)
(72) Inventor: BALASUBRAMANIAN, Srinivasan, Dallas, TX 75234 (US); JALLOULI, Aref, Dallas, TX 75234 (US)
(74) Representative: Plasseraud IP

(57) **Abstract**

Apparatus (1) for heat treatment of at least one lens body (3), the apparatus (1) comprising
- at least one mold assembly (7) for casting a lens, each mold assembly (7) comprising a first mold member (9) and a second mold member (9), the first and second mold members (9) being arranged to hold the lens body (3) between them,
- at least one induction coil (15) disposed facing the at least one mold assembly (7), and
- a temperature control unit (17) configured to monitor a temperature in the mold assembly (7), wherein at least one from the first mold member (9) and the second mold member (9) comprises at least one metallic part (11, 25, 29) made of a metallic material, the induction coil (15) being configured to generate a magnetic field when supplied with electrical current and generate heat in each metallic part of each mold assembly (7).

## Description

### Field of the invention

The invention relates to an apparatus for heat treatment of at least one lens body and a method for heat treatment implementing this apparatus.

The invention also relates to an optical article comprising at least one lens body treated through this method.

### Background of the invention

Ophthalmic lenses are routinely manufactured by casting a polymer material, through a curing process of a polymerizable composition in a mold, giving them the appropriate shape.

The curing time required for sufficient hardening of the material is a limiting factor to the production rate of the lenses.

The expression "lens body" is used in this document to designate either a finished lens, a non-finished lens, such as a solid body intended to be further refined into a lens, or a fluid or gel material intended to be hardened and/or cured to form a lens.

The lens is for example an optical lens, preferably an ophthalmic lens.

A usual casting process used in the ophthalmic industry typically comprises the following steps: mixing one or more monomers in a tank and adding eventual catalysts and additives, to form a polymerizable composition, pouring this composition into molds assemblies, and then subjecting these filled mold assemblies to a thermal cycle in an oven, for a typical duration of 20 hours, to polymerize and cure the composition.

Each mold assembly consists of two opposite glass mold members shaped to provide front and back surfaces of the lens and an elastomeric gasket or adhesive tape used to seal the sides of the mold.

The initiation and propagation of the polymerization reaction is heat activated. Furthermore, the reaction is usually exothermic, and in order to avoid thermal hotspots causing irregularities in the cast lens, the temperature of each mold assembly needs to be controlled.

This thermal control is implemented in the oven during curing, through the convection heating system of the enclosure of the oven and at least one temperature sensor for implementing a feedback loop. Sensors can be used to monitor a global temperature in the oven, or more preferably an individual temperature of each mold assembly.

These processes can be improved upon. Indeed, the temperature control of the mold assemblies is not precise, as the heating device shows a high inertia that does not allow for a precise control loop of the temperature. Furthermore, the energy efficiency of the heating device is low and thus the energy efficiency of the casting process can be improved. Together with a reduction in the duration of the casting phase, this allows to reduce the energy requirements of the casting phase and the associated costs as well as to improve production rates.

### Summary of the invention

The invention aims at solving these problems by providing an improved method for casting lenses. To this end, the invention relates to an apparatus for heat treatment of at least one lens body, the apparatus comprising
- at least one mold assembly for casting a lens, each mold assembly comprising a first mold member and a second mold member, the first and second mold member being arranged to hold the lens body between them,
- at least one induction coil disposed facing the at least one mold assembly, and
- a temperature control unit configured to monitor a temperature in the mold assembly,
wherein at least one from the first mold member and the second mold member comprises at least one metallic part made of a metallic material, the induction coil being configured to generate a magnetic field when supplied with electrical current and generate heat in each metallic part of each mold assembly.

Such an apparatus allows for the use of an induction heat source for temperature treatment of a lens body, permitting a faster and more accurate generation of heat as well as an improved energy efficiency.

The apparatus may include at least one temperature sensor arranged to monitor a temperature in each mold assembly.

At least one from the first mold member and the second mold member may comprise as the metallic part a half-mold made of metallic material.

The half-mold is, for example, a convex mold member or a concave mold member.

This feature allows a good thermal contact between the metallic part and the contents of the mold. A metallic mold also presents desirable hardness and resistance properties.

One from the first mold member and the second mold member may comprise a half-mold made of metallic material and the other comprises a half mold made of a transparent non-metallic material.

This feature allows a visual control of the contents of the lens mold, for example to check the presence of air bubbles.

The transparent non-metallic material is for example glass.

The first mold member and the second mold member may each comprise a half-mold made of non-metallic materials, at least one from the first mold member and the second mold member further comprising, as the metallic part, a holder plate for the half-mold, said holder plate being made of a metallic material and extending over an outer surface of the half-mold.

This feature allows for replaceable glass half-molds to adapt the apparatus to treat various shapes of lenses.

The first mold member and the second mold member may each comprise a half-mold made of non-metallic materials, at least one from the first mold member and the second mold member further comprising, as the metallic part, a metallic coating made of a metallic material and extending over an outer surface of the half-mold.

This feature allows for a good thermal bond between the non-metallic half-mold and the metallic part, as well as easy and fast preparation of the mold member by, for example, spraying a coat of metallic material on a glass mold.

The metallic coating may present a thickness, measured along a direction perpendicular to the outer surface, comprised between 0,1 mm and 1 mm.

The metallic part may extend over a portion of the outer surface of the half-mold comprising at least 80% of a total surface area of the outer surface of the half mold. This allows for an efficient heat transfer from the metallic part to the half-mold.

The metallic material may present an electrical conductivity comprised between 1×10⁶ S/m and 2×10⁷ S/m at a temperature of 20°C.

This feature allows for an improved heat generation by Joules effect through the induced electrical current.

The metallic material may comprise at least 50% of iron by weight.

This feature allows for an efficient generation of the induced electrical current ant a sufficient electrical resistance to generate heat.

The invention also relates to a method for heat treatment of at least one lens body, implementing an apparatus as described above, the method comprising steps of:
- holding the lens body between the first mold member and the second mold member of the mold assembly,
- generating an electrical current in the induction coil and creating an induced electrical current in the metallic part of the mold assembly, generating heat in the mold assembly through Joule effect,
- treating the lens body in the mold assembly and monitoring a temperature in the mold assembly during the treatment, and
- removing the treated lens body from the mold assembly.

Such a method allows for a more energy-efficient method of generating heat in a mold assembly containing a lens body. This allows for a faster heat treatment and/or for less energy expenditure during the heat treatment phase.

The method may comprise a preliminary step of preparing the mold assembly by depositing a metallic coating over an outer surface of a half mold made of a non-metallic material.

The coating may be deposited by spraying.

The heat treatment may be a casting of a lens and comprises a thermally-activated polymerization of a fluid or gel material contained in the mold assembly to create a solid lens. Casting of a lens is a long process with high energy requirements, and benefits highly from improved energy efficiency.

The fluid or gel material may comprise a prepolymer.

A prepolymer is a solution comprising molecules each formed of a plurality of monomers, thus showing a higher degree of polymerization than a monomer solution, but a still incomplete polymerization.

This type of material allows for a faster polymerization, further accelerating the casting process. The heat treatment may be a hardening of a coating layer applied on the lens body before placement in the mold assembly.

This type of process benefits from improved temperature control and energy efficiency, to ensure a better homogeneity of the coating.

The heat treatment may comprise a migration inside the lens body of a dye deposited on the lens body before placement in the mold assembly.

This type of process is improved by a more accurate temperature monitoring allowed by the method after the invention.

The invention further relates to an optical article comprising at least one lens obtained from a lens body treated through a method as described above.

### Brief description of the drawings

- Figure 1 is a schematic representation of an apparatus for heat treatment of at least one lens body, according to a first embodiment of the invention, during a preparation step of the casting process,
- Figure 2 is a partial schematic representation of an apparatus according to a second embodiment of the invention,
- Figure 3 is a partial schematic representation of an apparatus according to a third embodiment of the invention, and
- Figure 4 is a schematic representation of an apparatus according to a fourth embodiment of the invention.

### Detailed description of embodiments

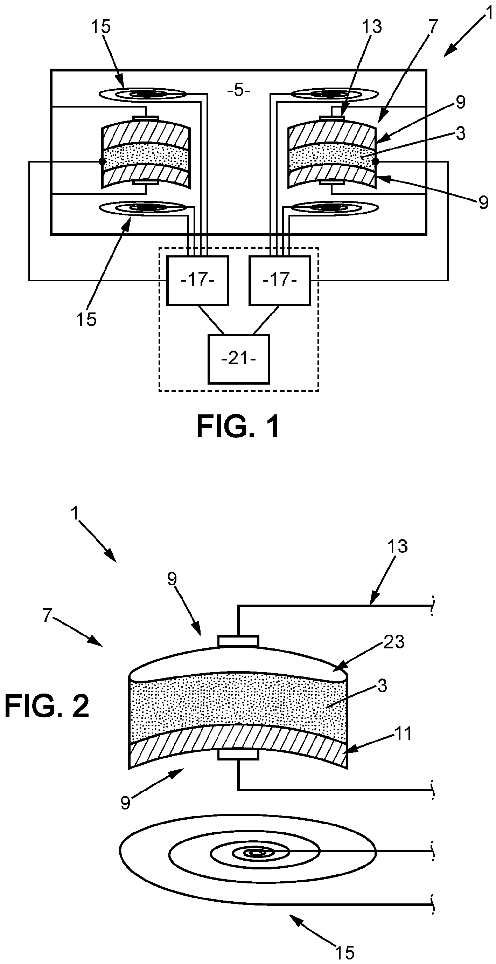

An apparatus 1 for heat treatment of at least one lens body 3 is represented on figure 1. The apparatus 1 is used for example in the manufacturing of lenses by casting, as well as other types of heat treatments such as a hardening of a surface coating or a migration of a surface dye into the lens that is activated by heat.

The apparatus 1 comprises an enclosure defining an inner volume 5 that is thermally insulated from the environment, and advantageously also provides at least partial electromagnetic shielding.

The apparatus 1 further comprises at least one mold assembly 7, preferably a plurality of mold assemblies 7, arranged in the enclosure 5. Each mold assembly 7 is designed to receive and hold a lens body 3 during the heat treatment.

In case of a fluid or gel lens body, the sides of the mold assembly 7 are closed by use of a gasket or adhesive tape.

The expression "lens body" is used to designate either a finished lens, a non-finished lens, such as a solid body intended to be further refined into a lens, or a fluid or gel material intended to be hardened and/or cured to form a lens.

For example, in a casting process, the lens body placed in the mold assembly is a polymerizable composition in a fluid or gel state.

Each mold assembly comprises two mold members 9 arranged facing each other to hold the lens body between them.

The mold members 9 each comprise a half-mold 11, such as a concave mold or a convex mold, and a holder 13 for the half mold 11.

The concave and concave molds respectively comprise a concave molding surface and a concave molding surface, facing inward toward the lens body 3 and conformed to follow respectively a convex face of the lens and a concave face of the lens.

The holder 13 are for example clamps, arranged to hold in place the half-mods 11 during the thermal treatment process.

In the embodiment shown on figure 1, both half-molds 11 are made of a metallic material. The metallic material is chosen from among metals and metallic alloys to be compatible with an induction-based heat generation.

Preferably, the metallic material presents an electrical conductivity comprised between 1×10⁶ S/m and 2×10⁷ S/m at a temperature of 20°C, to provide an efficient heat generation by Joule effect from an induced electrical current circulating in the metallic material.

For example, the metallic material comprises a ferrous metal, for example cast iron, steel, chrome plated steel and stainless steel.

Preferably, the metallic material comprises at least 50% of ferrous metal, by weight, for example at least 50% of iron, by weight.

Steel is advantageous in that its specific heat is about two thirds that of glass, and thus the mold assembly 7 requires less heat to raise the temperature of the lens body 3. Furthermore, steel half molds benefit from a very high mechanical resistance to breaking and abrasion. Finally, in case of surface damage to one of the molding surfaces of the half-molds, the surface may be regenerated through specific treatments, which is more difficult for glass.

The apparatus 1 further comprises at least one induction coil 15 arranged facing the mold assemblies 7 and configured to generate a magnetic field when supplied with electrical current. Preferably, the apparatus 1 comprises one such induction coil 15 for each mold member 9 comprising a metallic part, such as the two half molds 11 in the example from figure 1.

This increased number of induction coils 15 allows the placing of one such coil in the vicinity of each mold member 9 comprising a metallic part, and thus improves the efficiency of the induction heat generation in each mold assembly 7.

Each induction coil 15 is linked to a control module 17, preferably disposed outside the enclosure 1, and comprising an electrical generator configured to supply a controlled electrical current through the induction coil 15 and thereby generate the magnetic field and induced current in the facing metallic part, generating heat in the metallic part of the mold assembly 7. The heat then propagates to the entire mold assembly 7, raising the temperature of the mold assembly 7 and the lens body 3.

Each control module 17 is further connected to at least one temperature sensor 19 configured to measure a temperature in the associated mold assembly 7.

The control module 17 is configured to regulate the temperature in the mold assembly 7 by increasing of decreasing the intensity of the electrical current supplied to the induction coil 15, and thereby the amount of heat generated by induction in the mold assembly 7, depending on the measured temperature and a temperature setpoint.

The control modules 17 are preferentially linked together in a temperature control unit, further comprising a user interface 17 through which a user may pilot all the control modules 17 and assign heat treatment parameters.

Examples of such heat treatment parameters include temperature setpoints, a treatment duration, a temperature variation rate, or even a temperature variation profile over the duration of the treatment.

The use of induction heating instead of convection heating allows for a more efficient heat generation, and thus a lowered energy cost to maintain the curing temperature. Indeed, induction heat generation is usually considered to be about twice as efficient as conventional convection heat generation. Additionally, the curing time may be reduced through a more precise control of the curing temperature, further reducing the overall energy consumption.

A second embodiment of the apparatus 1 is represented on figure 2, which shows a single mold assembly 7 containing a lens body 3, and an associated induction coil 15. The apparatus 1 according to the second embodiment is similar to the apparatus described above except for the following.

The mold members 9 comprise a metallic half-mold 11 and a glass half-mold 23. In the shown example, the glass half-mold 23 is the concave mold, but the opposite is equally possible.

The apparatus 11 comprises a single induction coil 15 associated with the old assembly 7, as the glass half mold 23 is not electrically conductive and thus not suitable to heat generation through induction. This reduces the overall efficiency of the heat generation but offers an advantage due to the optical transparency of glass, which allows for visual inspection of the contents of the mold assembly 7.

Thus, the presence of air bubbles in a lens body made of a fluid or gel material can be detected and corrected prior to the curing of the lens body 3.

Furthermore, this embodiment allows for use of previously existing glass half-molds 23 and only partially replacing them with metallic half-molds 11.

Other transparent materials can be envisioned instead of glass for the half-mold 23, such as a heat resistant polymer material, for example.

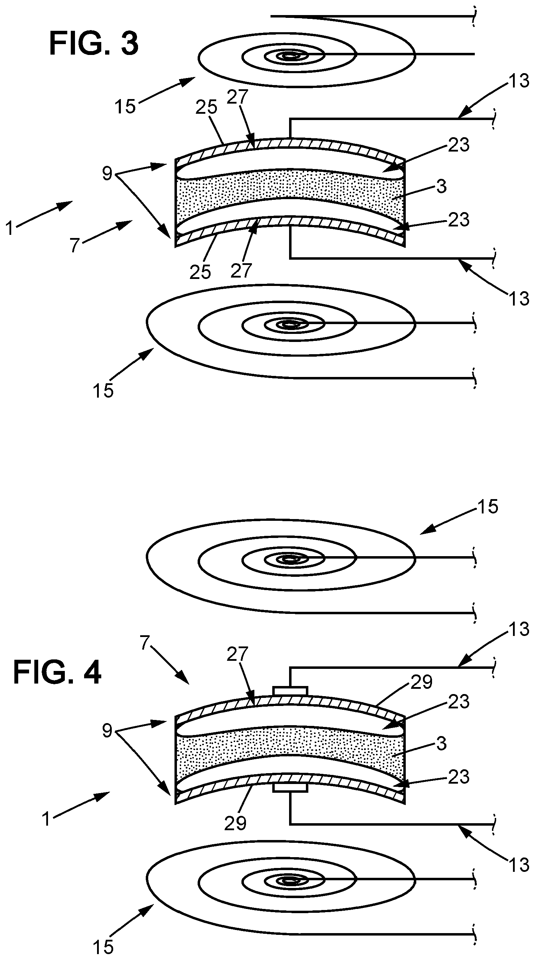

A third embodiment of the apparatus 1 according to the invention is partially shown on figure 3. The apparatus 1 according to the third embodiment is identical to the apparatus described above except for the following.

In the third embodiment, both mold members 9 comprise a non-metallic half-mold 23, for example a glass half-mold 23.

Each holder 13 comprises a clamping plate 25 made of a metallic material, conformed to be in contact with an outer surface 27 of each non-metallic half-mold 23 and serving as the metallic part of the mold member 9 used for induction heating.

The clamping plates 25 are in tight contact with the outer surface of the non-metallic half-molds 23 to allow for an efficient heat transfer.

Advantageously, the clamping plates 25 extend over a respective portion of the outer surface 27 of the half-mold 23 comprising at least 80% of a total surface area of the outer surface 27 of the half mold 23. This allows for a more efficient heat transfer and a more homogenous heat flow over the surface of the lens body 3.

The apparatus 1 advantageously comprises two induction coils 15 facing the clamping plates 25 for generating an induction electrical current in the plates 25.

A fourth embodiment of the apparatus 1 according to the invention is partially shown on figure 4. The apparatus 1 according to the fourth embodiment is identical to the apparatus described above except for the following.

In the fourth embodiment, both mold members 9 comprise a non-metallic half-mold 23, for example a glass half-mold 23. The non-metallic half-molds 23 comprise a metallic coating layer 29 extending over the outer surface 27 of the half-mold and serving as the metallic part of the mold member 9 used for induction heating.

The coating 29 is made with a metallic material as described above.

Preferably, the coating 29 extends over a portion of the outer surface 27 of the half-mold 23 comprising at least 80% of a total surface area of the outer surface 27 of the half mold 23. This allows for a more efficient heat transfer and a more homogenous heat flow over the surface of the lens body 3.

For example, the coating 27 may be applied by spraying the outer surface 27 of each half-mold 23 with a metallic spray can, before the placing of the lens body in the mold assembly 7. Alternatively, the coating maw be deposited with a brush, of through a more specific method such as electrodeposition.

This embodiment allows for a fast modification of a previously existing glass half-mold for use with the induction heat treatment process according to the invention.

All the above embodiments can be freely combined with one another according to the technical knowledge of the skilled person. Furthermore, in any mold assembly, the half-molds do not have to be of the same type and correspond to the same embodiment of the invention.

The invention also relates to a heat treatment process, implementing an apparatus 1 as described above.

The method comprises a preliminary step of preparing a lens body for the heat treatment, such as for example mixing a monomer solution with specific catalysts and additives, to form a polymerizable composition to pour into the mold assembly 7 and form the lens body 3. Alternatively, the step may comprise the application of a coating on at least one surface of lens to create a coating, the coated lens forming the lens body 3.

Alternatively, the step may comprise the application of a dye on at least one surface of a lens to be migrated into the lens. Such a dry tinting process is for example described in document JP 2004/121434.

The process may comprise a step of preparing at least one glass half mold 23 by depositing a metallic coating, for example by spraying, as disclosed in the fourth embodiment above.

The process then comprises a step of holding the lens body 3 between the first mold member 9 and the second mold member 9 of the mold assembly 7, for the whole duration of the heat treatment. The sides of the mold assembly 7 may be closed with an elastomeric gasket or adhesive tape, if needed.

The process then comprises a step of generating an electrical current in the induction coils 15, under control of each control module 17, and creating an induced electrical current in the metallic part of the associated mold assembly 7, generating heat in the mold assembly 7 through Joule effect.

The temperature in the mold assembly 7 is continuously monitored and the induction heating adjusted to comply to the temperature setpoint, or temperature profile, entered in the control unit.

The process finally comprises a step of removing the treated lens body from the mold assembly and obtaining a finished lens body, that may be used for further treatment procedures.

In a preferred embodiment, the polymerizable composition comprises prepolymers (also called oligomers) instead of monomers. Prepolymers are partially reacted monomers, comprising molecules each formed of several identical monomers.

The use of prepolymers helps reduce the curing time even more, by starting with a partially polymerized composition, to further reduce the global energy cost.

While the described apparatus and method are mainly described in the context of heatactivated polymerization, they can also be used for any lens polymerization process where heat is needed as part of the process, such as UV-initiated polymerization where a heating step is needed to complete the reaction, for example.

Below are described two comparative examples, respectively implementing a traditional convection heating process and an induction heating process according to the invention.

### Example 1:

A catalyst solution comprising 0,191 g of 18-crown-6, 0,048 g of KSCN and 0,318 g of thioethanol is prepared. Then 10,00 g of NCO terminated prepolymer made with an 8/1 ratio of NCO/SH (viscosity equals 0,071 Pa.s at 25°C) is mixed with 9,39 g of SH terminated prepolymer made with a 8/1 ratio of SH/NCO (viscosity equals 0,543 Pa.s at 25°C), combined with the catalyst solution and the mixture filled in to the mold assembly containing glass molds. Gelation occurs in less than 10 minutes at room temperature, and the reaction is completed in an air convection oven at 135°C for 2 hours. The total energy used to complete the curing cycle in the convection oven is 2,7 kW.

### Example 2:

A catalyst solution comprising 0,191 g of 18-crown-6, 0,048 g of KSCN and 0,318 g of thioethanol is prepared. Then 10,00 g of NCO terminated prepolymer made with an 8/1 ratio of NCO/SH (viscosity equals 0,071 Pa.s at 25°C) is mixed with 9,39 g of SH terminated prepolymer made with a 8/1 ratio of SH/NCO (viscosity equals 0.543 Pa.s at 25C), combined with the catalyst solution and the mixture filled in to the mold assembly containing ferrous metal molds. Gelation occurs in less than 10 minutes at room temperature, and the reaction is completed in an induction oven at 135°C for 2 hours. The total energy used to complete the curing cycle in the induction oven is 1,5 kW, showing an almost doubling of the energy efficiency compared to example 1.

## Claims

1. Apparatus (1) for heat treatment of at least one lens body (3), the apparatus (1) comprising
- at least one mold assembly (7) for casting a lens, each mold assembly (7) comprising a first mold member (9) and a second mold member (9), the first and second mold members (9) being arranged to hold the lens body (3) between them,
- at least one induction coil (15) disposed facing the at least one mold assembly (7), and
- a temperature control unit (17) configured to monitor a temperature in the mold assembly (7), wherein at least one from the first mold member (9) and the second mold member (9) comprises at least one metallic part (11, 25, 29) made of a metallic material, the induction coil (15) being configured to generate a magnetic field when supplied with electrical current and generate heat in each metallic part of each mold assembly (7).

2. Apparatus (1) according to claim 1, wherein at least one from the first mold member (9) and the second mold member (9) comprises as the metallic part a half-mold (11) made of metallic material.

3. Apparatus (1) according to claim 2, wherein one from the first mold member (9) and the second mold member (9) comprises a half-mold (11) made of a metallic material and the other comprises a half mold (23) made of a transparent non-metallic material.

4. Apparatus (1) according to claim 1, wherein the first mold member (9) and the second mold member (9) each comprise a half-mold (23) made of non-metallic materials, at least one from the first mold member (9) and the second mold member (9) further comprising, as the metallic part, a holder plate (25) for the half-mold, said holder plate (25) being made of a metallic material and extending over an outer surface (27) of the half-mold (23).

5. Apparatus (1) according to claim 1, wherein the first mold member (9) and the second mold member (9) each comprise a half-mold (23) made of non-metallic materials, at least one from the first mold member (9) and the second mold member (9) further comprising, as the metallic part, a metallic coating (29) made of a metallic material and extending over an outer surface (27) of the half-mold (23).

6. Apparatus (1) according to claim 4 or 5, wherein the metallic part (25, 29) extends over a portion of the outer surface (27) of the half-mold (23) comprising at least 80% of a total surface area of the outer surface (27) of the half mold (23).

7. Apparatus (1) according to any one of the preceding claims, wherein the metallic material presents an electrical conductivity comprised between 1×10⁶ S/m and 2×10⁷ S/m at a temperature of 20°C.

8. Apparatus (1) according to any one of the preceding claims, wherein the metallic material comprises at least 50% of iron by weight.

9. Method for heat treatment of at least one lens body (3), implementing an apparatus (1) according to any one of the preceding claims, the method comprising steps of:
- holding the lens body (3) between the first mold member (9) and the second mold member (9) of the mold assembly (7),
- generating an electrical current in the induction coil (15) and creating an induced electrical current in the metallic part of the mold assembly (7), generating heat in the mold assembly (7) through Joule effect,
- treating the lens body (3) in the mold assembly and monitoring a temperature in the mold assembly (7) during said treatment, and
- removing the treated lens body (3) from the mold assembly (7).

10. Method according to claim 9, wherein the method comprises a preliminary step of preparing the mold assembly (7) by depositing a metallic coating (29) over an outer surface (27) of a half-mold (23) made of a non-metallic material.

11. Method according to claim 9 or 10, wherein the heat treatment is a casting of a lens and comprises a thermally-activated polymerization of a fluid or gel material contained in the mold assembly (7) to create a solid lens.

12. Method according to claim 11, wherein the fluid material comprises a prepolymer.

13. Method according to claim 9 or 10, wherein the heat treatment is a hardening of a coating layer applied on the lens body (3) before placement in the mold assembly (7).

14. Method according to claim 9 or 10, wherein the heat treatment comprises a migration inside the lens body (3) of a dye deposited on the lens body (3) before placement in the mold assembly (7).

15. Optical article comprising at least one lens obtained from a lens body (3) treated through a method according to any one of claims 9 to 14.
